# EUROPEAN PATENT APPLICATION

(11) **EP 1 361 745 A1**
(43) Date of publication of application: **12.11.2003**
(21) Application number: 03252784.8
(22) Date of filing: 02.05.2003
(51) Int. Cl.: H04N 1/00, H04N 1/32

(54) **Digital image display stand, digital image display system, and use method of digital image display stand**

(30) Priority: 08.05.2002 JP 2002132953
(71) Applicant: Pioneer Corporation, Meguro-ku, Tokyo (JP)
(72) Inventor: Horiuchi, Naoaki, c/o Corporate Research and Dev., Tsurugashima-shi, Saitama (JP); Sakano, Michio, c/o Corporate Research and Dev., Tsurugashima-shi, Saitama (JP); Sugie, Sinichi, c/o Corporate Research and Dev., Tsurugashima-shi, Saitama (JP); Izawa, Masataka, c/o Corporate Research and Dev., Tsurugashima-shi, Saitama (JP); Nakamura, Kenji, c/o Corporate Research and Dev., Tsurugashima-shi, Saitama (JP); Mito, Kenji, c/o Corporate Research and Dev., Tsurugashima-shi, Saitama (JP)
(74) Representative: Haley, Stephen

(57) **Abstract**

A digital image display stand for enabling even persons who feel inferior to digital machines to easily view a transmitted digital image without performing intricate operation. The digital image display includes a reception section which receives digital image data transmitted via a communication line; a storage section which stores at least digital image data corresponding to one frame, of the digital image data received by the reception section; and an image display section which displays the digital image data stored in the storage section.

## Description

The present disclosure relates to the subject matter contained in Japanese Patent Application No. 2002-132953 filed May 8, 2002, which is incorporated herein by reference in its entirety.

This invention relates to a digital image display stand for receiving and displaying digital image data. It also relates to a digital image display system including a transmitter for transmitting digital image data and a digital image display stand for receiving and displaying digital image data from the transmitter. The invention further relates to a use method of a digital image display stand for receiving and displaying digital image data transmitted via a communication line.

For example, to attempt to request another person at a remote location to view a photograph taken by a digital camera or read by a scanner, namely, a digital image, it is necessary to transmit the digital image to the person by electronic means of electronic mail, etc., or send a record medium recording the image data to the person. Particularly to transmit the digital image to the person by electronic means, time and space limitations can be decreased drastically. A large number of youths enjoy the convenience; on the other hand, persons who are not familiar with operation or concept of digital machines, mostly, aged persons or persons who feel inferior to digital machines cannot enjoy the convenience.

Digital machine manufacturers have made efforts to improve the ease of use of digital machines, and the user range of digital machines has been widened greatly for several years. Recently, the percentage of persons owning a personal computer has also been increased and it has been made possible to transmit a digital image even from a mobile telephone.

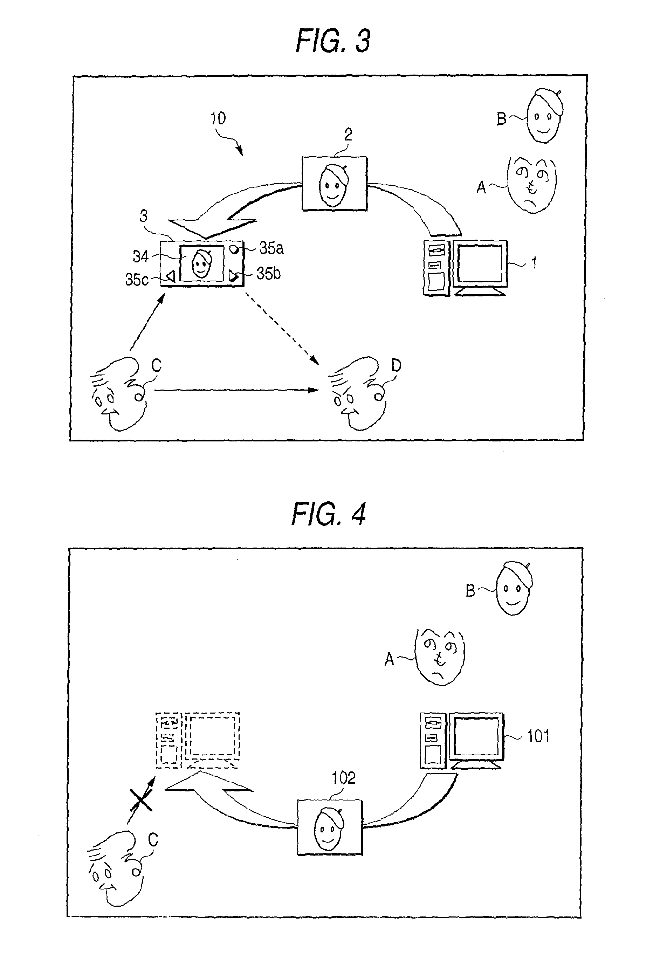

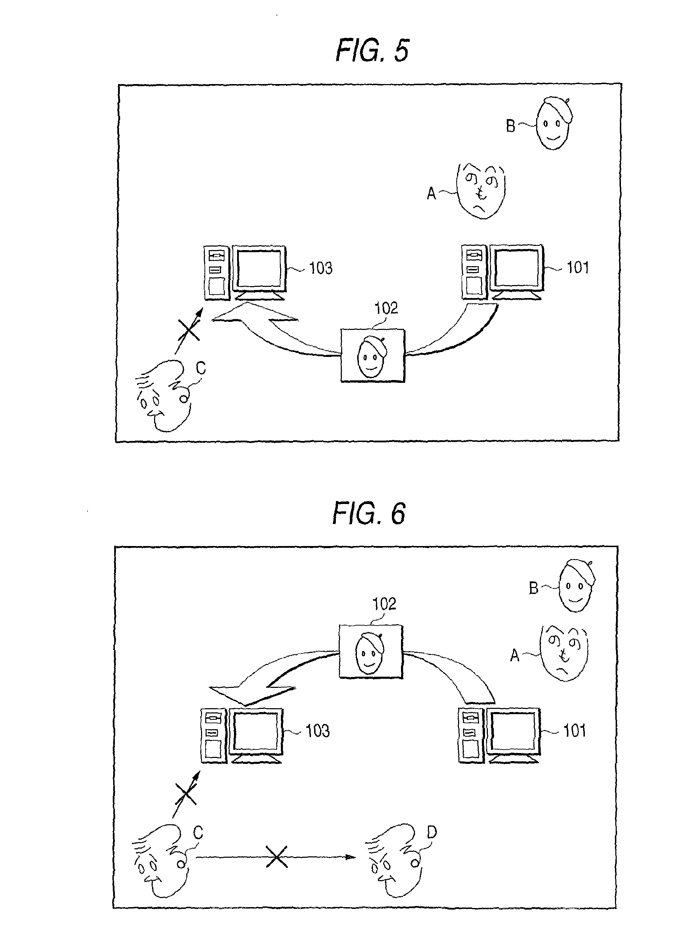

By the way, to attempt to request another person at a remote location to view a photograph taken by a digital camera or read by a scanner, namely, a digital image, for example, it is necessary to transmit the digital image to the person by electronic means of electronicmail, etc., as described above, in which case, the person receiving the digital image also needs to view the digital image by some means. The digital image has the advantage that it can be transmitted easily by electronic means of electronic mail, etc., but is inferior to traditional photos in viewability. For example, as shown in FIG. 4, if an owner A of a personal computer 101 wants for his or her father C at a remote location to view a photo (digital image) 102 of a son B of the owner A taken by a digital camera (not shown) and attempts to transmit the photo 102 by electronic means of electronic mail, etc., the father C who does not own any digital image viewing machine such as a personal computer can neither receive nor view the photo 102. As shown in FIG. 5, if the ownerAof the personal computer 101 transmits the photo (digital image) 102 by electronic means of electronic mail, etc., the father C who owns a personal computer 103 can receive the photo 102, but cannot view the photo 102 unless the father C performs intricate operation to view the photo 102.

If the owner A of the personal computer 101 transmits the photo (digital image) 102 as an attached file to electronic mail, to receive the photo 102, the father C who owns the personal computer 103 must check whether or not the transmitting person is a trustworthy party and whether or not the attached file is undoubtedly an image file because it is feared that the attached file may contain a virus; the father C can neither receive nor view the photo 102 unless he performs such intricate checking. The virus can be checked using a commercially available virus checker, etc., but it is a concept hard to understand by beginners including aged persons.

Further, as shown in FIG. 6, even if the father C who owns the personal computer 103 can receive and view the photo (digital image) 102, if he requests his friend D to view the photo 102, the father C needs to transmit the photo 102 to the friend D (if the friend D owns a digital image viewing machine such as a personal computer) or needs to carry a digital image viewing machine (for example, a notebook computer) ; it is not easy to request his friend D to view the photo 102.

It is therefore an object of the invention to provide a digital image display stand, a digital image display system, and a use method of a digital image display stand for enabling even persons who feel inferior to digital machines centering around aged persons to easily view a transmitted digital image without performing intricate operation.

According to the invention, there is provided a digital image display stand, including: a reception section which receives digital image data transmitted via a communication line; a storage section which stores at least digital image data corresponding to one frame, of the digital image data received by the reception section; and an image display section which displays the digital image data stored in the storage section.

According to the digital image display stand, the digital image data transmitted via the communication line is received and is displayed. Thus, even persons who feel inferior to digital machines centering around aged persons can easily view the digital image without performing intricate operation.

The image display section may display the digital image data stored in the storage section for a predetermined time.

According to this digital image display stand, the digital image data transmitted via the communication line is received and is displayed only for the predetermined time.

The digital image display stand may further includes: a redisplay section which redisplays the digital image data on the image display section for a predetermined time after display of the digital image data terminates.

According to this digital image display stand, the redisplay section redisplays the digital image data only for the predetermined time after display of the digital image data terminates.

The digital image display stand may further includes: a selection section which selects digital image data corresponding to any desired frame from among the digital image data stored in the storage section and displaying the selected digital image data on the image display section.

According to the digital image display stand, the digital image data corresponding to any desired frame is selected through the selection means and is displayed.

Preferably, the digital image data is digital still image data.

According to this digital image display stand, the digital still image data transmitted via the communication line is received and is displayed.

The digital image data may be transmitted from a specific transmitter.

According to this digital image display stand, the digital image data transmitted via the communication line from the specific transmitter is received and is displayed.

The reception section may receive only digital image data.

According to this digital image display stand, the digital image data only transmitted via the communication line is received and is displayed.

According to the invention, there is provided a digital image display system including: a transmitter which transmits digital image data; and a digital image display stand which receives and displays the digital image data from the transmitter. The digital image display stand includes: a reception section which receives the digital image data transmitted via a communication line from the transmitter; a storage section which stores at least digital image data corresponding to one frame, of the digital image data received by the reception section; and an image display section which displays the digital image data stored in the storage section.

According to the invention, there is provided a use method of a digital image display stand including: purchasing a digital image display stand for receiving and displaying digital image data transmitted via a communication line; setting the digital image display stand so that the digital image display stand receives digital image data from a transmitter; installing the setup digital image display stand; and transmitting the digital image data from the transmitter to the installed digital image display stand. The digital image display stand receives and displays the digital image data from the transmitter.

According to the use method of the digital image display stand, the transmission user purchases, sets, and installs the digital image display stand (gives or passes the digital image display stand to the reception user). Thus, a psychological burden that "a machine that may be unable to be managed must be purchased" need not be put on the reception user.

According to the invention, the setting stepmay includes: connecting the digital image display stand to the transmitter; and operating the transmitter to set identification information to identify the transmitter in the digital image display stand.

According to the use method of the digital image display stand, the transmission user connects the digital image display stand to the transmitter and operates the transmitter to set the identification information to identify the transmitter in the digital image display stand.

According to the invention, there is provided a use method of a digital image display stand including: a first person purchasing a digital image display stand for receiving digital image data transmitted via a communication line and automatically displaying the digital image data; passing the digital image display stand from the first person to a second person; the second person installing the digital image display stand; and the first person transmitting the digital image data to the digital image display stand. The digital image display stand receives and displays the digital image data.

According to the use method of the digital image display stand, the first person purchases the digital image display stand, the digital image display stand is passed from the first person to the second person, and the second person installs the digital image display stand.

The use method of the digital image display stand may further include: setting the digital image display stand so that the digital image display stand receives digital image data only from a specific transmitter.

According to the use method of the digital image display stand, the digital image display stand receives the digital image data only from the specific transmitter.

According to the invention, there is provided a digital image data display method including: receiving digital image data transmitted via a communication line; storing at least digital image data corresponding to one frame, of the received digital image data; and displaying the stored digital image data.

The present invention may be more readily described with reference to the accompanying drawings:
FIG. 1 is a drawing to schematically show a digital image display stand and a digital image display system according to a first embodiment of the invention;
FIG. 2 is a block diagram to show the electric configuration of the digital image display stand according to the first embodiment of the invention;
FIG. 3 is a drawing to schematically show a digital image display stand and a digital image display system according to a second embodiment of the invention;
FIG. 4 is a drawing to schematically show a related art example for a personal computer owner to transmit a photo (digital image);
FIG. 5 is a drawing to schematically show another related art example for a personal computer owner to transmit a photo (digital image); and
FIG. 6 is a drawing to schematically show still another related art example for a personal computer owner to transmit a photo (digital image).

Referring now to the accompanying drawings, there are shown preferred embodiments of the invention.

### (First embodiment)

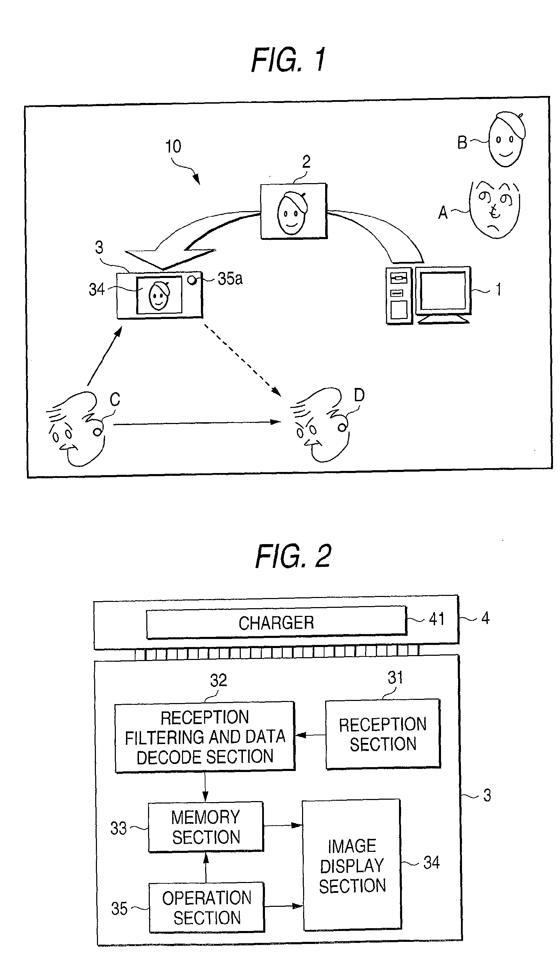

FIG. 1 is a drawing to schematically show a digital image display stand 3 and a digital image display system 10 according to a first embodiment of the invention. In FIG. 1, the digital image display system 10 at least includes a personal computer 1 having a function as a specific transmitter for transmitting digital still image data and a digital image display stand 3 for receiving and displaying the digital still image data from the personal computer 1. The personal computer 1 is owned by an owner A as a transmission user, and the digital image display stand 3 is owned by a father C of the owner A as a reception user. The digital image display stand 3 has an image display section 34 as image display means for automatically displaying the received digital still image data only for a predetermined time and a redisplay button 35a as redisplay means for redisplaying the digital still image data on the image display section 34 only for a predetermined time after display of the digital still image data terminates.

FIG. 2 is a block diagram to show the electric configuration of the digital image display stand 3 according to the embodiment. In FIG. 2, the digital image display stand 3 includes a reception section 31 for receiving encoded digital still image data transmitted via a communication line (for example, a public switched telephone line), a reception filtering and data decode section 32 for receiving the encoded digital still image data only from the personal computer 1 based on preset identification information to identify the personal computer 1 (for example, telephone number) and decoding the data, a memory section 33 as storage means for storing digital still image data corresponding to one frame (one photo), of the digital still image data received by the reception section 31 and the reception filtering and data decode section 32 as reception means and decoded by the reception filtering and data decode section 32, the above-mentioned image display section 34 as image display means for automatically displaying the digital still image data stored in the memory section 33 only for a predetermined time, and an operation section 35 including the above-mentioned redisplay button 35a as redisplay means for redisplaying the digital still image data on the image display section 34 only for a predetermined time after display of the digital still image data terminates. On the other hand, a support pad 4 for supporting the digital image display stand 3 can be detached from the digital image display stand 3 and includes a charger 41 for charging a battery (not shown) contained in the digital image display stand 3.

The described digital image display stand 3 is used, for example, according to the following procedure:
(1) To begin with, the owner A of the personal computer 1 as a transmission user (first person) purchases the digital image display stand 3.
(2) Next, the owner A sets the digital image display stand 3 so that the digital image display stand 3 receives digital still image data only from the personal computer 1.
(3) Next, the owner A installs the setup digital image display stand 3 in a house of the father C of the owner A as a reception user (second person) . Here, the father Cmay install the digital image display stand 3.
(4) Then, the owner A transmits digital still image data from the personal computer 1 to the digital image display stand 3.
(5) Consequently, the digital image display stand 3 receives the digital still image data only from the personal computer 1 and automatically displays the digital still image data.

To set the digital image display stand 3 in step (2), for example, the digital image display stand 3 may be connected to the personal computer 1 and the personal computer 1 may be operated to set the identification information to identify the personal computer 1 (for example, telephone number) in the reception filtering and data decode section 32 of the digital image display stand 3.

Subsequently, for example, as shown in FIG. 1, the operation for the owner A of the personal computer 1 to attempt to request his or her father C at a remote location to view a photo (digital image) 2 of a son B of the owner A taken by a digital camera (not shown) will be discussed. In this case, if the owner A operates the personal computer 1 to transmit the encoded photo 2 by electronic means of electronic mail, etc., the photo 2 (digital still image data) is received and decoded by the reception section 31 and the reception filtering and data decode section 32 of the digital image display stand 3, the received and decoded photo 2 is stored in the memory section 33, and the photo 2 stored in the memory section 33 is automatically displayed on the image display section 34 only for a predetermined time. Therefore, the father C can easily view the photo 2 without performing intricate operation. To redisplay the photo 2 on the image display section 34 after display of the photo 2 terminates, the redisplay button 35a may be operated.

Next, if the owner A transmits a different photo (not shown), the photo 2 is erased from the memory section 33 and instead the different photo is stored in the memory section 33 and is automatically displayed on the image display section 34 only for the predetermined time. That is, only the most recent photo is stored in the memory section 33.

Thus, according to the embodiment, the digital still image data transmitted via the communication line from the personal computer 1 is received and is automatically displayed, so that even persons who feel inferior to digital machines centering around aged persons can easily view the digital image without performing intricate operation. Since the digital still image data only from the personal computer 1 is received, there is no fear of a virus and intricate checking of a virus check, etc., need not be performed. Further, the digital image display stand 3 can be separated from the support pad 4 and is excellent in portability and thus the father C can carry the digital image display stand 3 to allow his or friend D to easily view the digital image (photo 2), as shown in FIG. 1. Further, hitherto persons who feel inferior to digital machines centering around aged persons, for example, have been unable to view a digital image unless they purchase a digital image viewing machine. According to the embodiment, however, the owner A of the personal computer 1 as the transmission user purchases, sets, and installs the digital image display stand 3 (gives or passes the digital image display stand 3 to the father C as the reception user), so that a psychological burden that "a machine that may be unable to be managed must be purchased" need not be put on the father C.

### (Second embodiment)

FIG. 3 is a drawing to schematically show a digital image display stand 3 and a digital image display system 10 according to a second embodiment of the invention. In FIG. 3, the digital image display stand 3 has an image display section 34 as image display means for automatically displaying received digital still image data only for a predetermined time, a redisplay button 35a as redisplay means for redisplaying the digital still image data on the image display section 34 only for a predetermined time after display of the digital still image data terminates, and a next photo button 35b (for selecting the next photo) and a previous photo button 35c (for selecting the previous photo) as selection means for selecting digital still image data corresponding to any desired frame from among the received digital still image data and displaying the selected digital still image data on the image display section 34.

In the embodiment, in the digital image display stand 3 (FIG. 2), a memory section 33 is provided as storage means for storing digital still image data corresponding to a plurality of frames (a plurality of photos), of the digital still image data received and decoded by a reception section 31 and a reception filtering and data decode section 32, and an operation section 35 includes the above-mentioned redisplay button 35a as redisplay means for redisplaying the digital still image data on the image display section 34 only for a predetermined time after display of the digital still image data terminates, and the above-mentioned next photo button 35b and the above-mentioned previous photo button 35c as selection means for selecting digital still image data corresponding to any desired frame from among the received digital still image data and displaying the selected digital still image data on the image display section 34. Other components are similar to those previously described with reference to FIG. 2 in the first embodiment and will not be discussed again.

Subsequently, for example, as shown in FIG. 3, the operation for the owner A of the personal computer 1 to attempt to request his or her father C at a remote location to view a photo (digital image) 2 of a son B of the owner A taken by a digital camera (not shown) will be discussed. In this case, if the owner A operates the personal computer 1 to transmit a plurality of photos including the encoded photo 2 by electronic means of electronicmail, etc., the plurality of photos including the photo 2 (digital still image data) are received and decoded by the reception section 31 and the reception filtering and data decode section 32 of the digital image display stand 3, the received and decoded photos including the photo 2 are stored in the memory section 33, and one of the photos including the photo 2 stored in the memory section 33 (for example, the first one photo) is automatically displayed on the image display section 34 only for a predetermined time. To display any desired one of the photos including the photo 2 on the image display section 34, the next photo button 35b and the previous photo button 35c may be operated appropriately. Therefore, the father C can easily view the plurality of photos including the photo 2 without performing intricate operation.

Next, if the owner A transmits a different set of photos (not shown), the different set of photos is additionally stored in the memory section 33 without erasing the plurality of photos including the photo 2 from the memory section 33, and one photo in the different set of photos (for example, the first one photo) is automatically displayed on the image display section 34 only for the predetermined time. If the photos are stored exceeding the storage capacity of the memory section 33, they are erased in order starting at the oldest photo.

According to the embodiment, advantages similar to those of the first embodiment described above can be provided.

In the first and second embodiments, digital still image data is transmitted and received, but the invention is not limited to it; digital moving image data may be transmitted and received.

As is evident from the description given above, according to the invention, even persons who feel inferior to digital machines centering around aged persons can easily view a transmitted digital image without performing intricate operation.

## Claims

1. A digital image display stand comprising:
a reception section which receives digital image data transmitted via a communication line;
a storage section which stores at least digital image data corresponding to one frame, of the digital image data received by the reception section; and
an image display section which displays the digital image data stored in the storage section.

2. The digital image display stand as claimed in claim 1 wherein the image display section displays the digital image data stored in the storage section for a predetermined time.

3. The digital image display stand as claimed in claim 2 further comprising:
a redisplay section which redisplays the digital image data on the image display section for a predetermined time after display of the digital image data terminates.

4. The digital image display stand as claimed in claim 1, further comprising:
a selection section which selects digital image data corresponding to any desired frame from among the digital image data stored in the storage section and displaying the selected digital image data on the image display section.

5. The digital image display stand as claimed in claim 1 wherein the digital image data is digital still image data.

6. The digital image display stand as claimed in claim 1 wherein the digital image data is transmitted from a specific transmitter.

7. The digital image display stand as claimed in claim 1 wherein the reception section receives only digital image data.

8. A digital image display system, comprising:
a transmitter which transmits digital image data; and
a digital image display stand which receives and displays the digital image data from the transmitter;
wherein
the digital image display stand includes:
a reception section which receives the digital image data transmitted via a communication line from the transmitter;
a storage section which stores at least digital image data corresponding to one frame, of the digital image data received by the reception section; and
an image display section which displays the digital image data stored in the storage section.

9. The digital image display system as claimed in claim 8,
wherein
the image display section displays the digital image data stored in the storage section for a predetermined time.

10. The digital image display system as claimed in claim 9,
wherein
the digital image display stand further includes a redisplay section which redisplays the digital image data on the image display section for a predetermined time after display of the digital image data terminates.

11. The digital image display system as claimed in claim 8,
wherein
the digital image display stand further comprises a selection section which selects digital image data corresponding to any desired frame from among the digital image data stored in the storage section and which displays the selected digital image data on the image display section.

12. The digital image display system as claimed in claim 8,
wherein
the digital image data is digital still image data.

13. The digital image display system as claimed in claim 8
wherein the digital image data is transmitted from a specific transmitter.

14. The digital image display system as claimed in claim 8 wherein the reception section receives only digital image data.

15. A use method of a digital image display stand, comprising:
purchasing a digital image display stand for receiving and displaying digital image data transmitted via a communication line;
setting the digital image display stand so that the digital image display stand receives digital image data from a transmitter;
installing the setup digital image display stand; and
transmitting the digital image data from the transmitter to the installed digital image display stand;
wherein
the digital image display stand receives and displays the digital image data from the transmitter.

16. The use method of the digital image display stand as claimed in claim 15
wherein
the setting step includes:
connecting the digital image display stand to the transmitter; and
operating the transmitter to set identification information to identify the transmitter in the digital image display stand.

17. The use method of the digital image display stand as claimed in claim 15 wherein the digital image data is digital still image data.

18. The use method of the digital image display stand as claimed in claim 15 wherein the digital image data is transmitted from a specific transmitter.

19. The use method of the digital image display stand as claimed in claim 15 wherein the digital image display stand receives only digital image data.

20. A use method of a digital image display stand, comprising:
a first person purchasing a digital image display stand for receiving digital image data transmitted via a communication line and automatically displaying the digital image data;
passing the digital image display stand from the first person to a second person;
the second person installing the digital image display stand; and
the first person transmitting the digital image data to the digital image display stand;
wherein
the digital image display stand receives and displays the digital image data.

21. The use method of the digital image display stand as claimed in claim 20, further comprising:
setting the digital image display stand so that the digital image display stand receives digital image data only from a specific transmitter.

22. The use method of the digital image display stand as claimed in claim 21
wherein the setting step includes:
connecting the digital image display stand to the specific transmitter; and
operating the specific transmitter to set identification information to identify the transmitter in the digital image display stand.

23. A digital image data display method, comprising:
receiving digital image data transmitted via a communication line;
storing at least digital image data corresponding to one frame, of the received digital image data; and
displaying the stored digital image data.
